(19) Europäisches Patentamt / European Patent Office / Office européen des brevets

(11) **EP 1 914 298 B1**

(12) **EUROPEAN PATENT SPECIFICATION**

(45) Date of publication and mention
of the grant of the patent:
**06.12.2017 Bulletin 2017/49**

(21) Application number: **06766452.4**

(22) Date of filing: **05.06.2006**

(51) Int Cl.:
*C12C 5/00* *(2006.01)*  *C12C 7/04* *(2006.01)*

(86) International application number:
**PCT/JP2006/311215**

(87) International publication number:
**WO 2007/007487 (18.01.2007 Gazette 2007/03)**

(54) **PROCESS FOR PRODUCTION OF BEER OR BEER-LIKE BEVERAGE**

VERFAHREN ZUR HERSTELLUNG EINES BIERÄHNLICHEN GETRÄNKS

PROCÉDÉ DE PRODUCTION DE BIÈRE OU DE BOISSON DE TYPE BIÈRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.07.2005 JP 2005198238**

(43) Date of publication of application:
**23.04.2008 Bulletin 2008/17**

(73) Proprietor: **Amano Enzyme Inc.**
**Nagoya-shi,**
**Aichi 460-0003 (JP)**

(72) Inventors:
• **AMANO, Hitoshi**
**Gifu R&D Center, Amano EnzymeInc.**
**Gifu 5090108 (JP)**
• **YAMAGUCHI, S.**
**Gifu R&D Center, Amano Enzyme Inc.**
**Gifu 5090108 (JP)**

(74) Representative: **Müller Fottner Steinecke**
**Rechtsanwalts- und Patentanwaltspartnerschaft mbB**
**Römerstraße 16 b**
**52428 Jülich (DE)**

(56) References cited:
WO-A2-02/32232         JP-A- 06 078 740
JP-A- 08 502 641       JP-A- 09 047 276
JP-A- 09 505 997       JP-A- 10 113 162
JP-A- 2005 052 158     JP-B1- 39 014 490
JP-B1- 42 003 072      US-A- 3 795 745
US-A- 6 036 983        US-B1- 6 465 209

**Description**

TECHNICAL FIELD

The present invention relates to a method for producing a beer or a beer-like beverage. More particularly, the present invention relates to a method for producing a beer or a beer-like beverage having improved flavor, good taste and the like.

BACKGROUND ART

The content and composition of protein and a degradation product thereof, i.e., peptide and free amino acid in wort have an important effect on the metabolism of yeast, resulting in largely changing the content of flavor components such as higher alcohol, ester, and diacetyl that are very important components for the quality of a beer. Furthermore, in a beer and a beer-like beverage, the foaming property and the continuation of foam are extremely important. Foam of a beer and a beer-like beverage has a role of preventing oxidation when the beer and beer-like beverage are poured into a glass and preventing carbon dioxide from being released. Foam which has a high density and which is not easily broken is ideal. It is known that a specified protein in a beer is involved in foam. Furthermore, it is generally said that protein largely contributes to the foam stability in food and that a solution of a higher molecular protein and a solution of a protein with higher concentration and higher viscosity form stable foam (see, for example, non-patent document 1).

Conventionally, it was almost impossible to control the concentration and composition of protein, peptide and amino acid in wort because the concentration and composition are largely dependent upon the quality of malt. Recently, in order to produce highly pure beer and beer-like beverage, it is known that an enzyme preparation is used in a production process of wort, and for the purpose of increasing the nitrogen content in wort, protease (protease) has been generally used.

For example, it has been proposed that protease be added in the production process of wort for beer brewing (see, for example, patent documents 1 and 2). However, this method improves only the content of free amino acid and the object of this method is to improve a flavor of a beer. Furthermore, a production process of wort, in which protease is added together with a barley raw material, has been proposed (see, for example, patent documents 3 and 4). However, this method aims to use barley as a raw material. In addition, a production process of wort, in which protease is added has been proposed in order to reduce the amount of malt to be used to arrive at a wort from which a satisfactory beer may be made (see, for example patent document 11). Furthermore, in the process of fermentation and storage of a beer, for the purpose of degrading protein that is a cause of turbidity, the use of protease such as papain has been known conventionally. However, it is said that this method deteriorates the continuation of foam of a beer.

On the other hand, a method of adding a protein degradation product in a production process of a beer or a beer-like beverage is disclosed. Patent document 5 discloses a method for improving the continuation of foam by adding a vegetable protein degradation product having a molecular weight of 3,500 to 30,000 at the terminal stage or end of main fermentation. Patent document 6 discloses a method for producing a beer having a new flavor, which has never been obtained by any conventional methods, by adding peptide having a molecular weight of 200 to 4,000 into a fermentation raw material solution before the initial stage of the main fermentation. Patent document 9 discloses a method for producing a fermented malt drink, such as beer, having a flavor and a taste enabling to compatibilize refreshment with mellowness by fermenting a raw material liquid containing malt oligosaccharides having saccharide polymerization degrees of 4 and 5 in a total content of $\leq$ 0.5 g/100 mL and further containing malt oligosaccharides having saccharide polymerization degrees of 6 and 7 in a total amount of 0.2-1.0g/100mL with a yeast. Patent document 10 discloses a process for preparing a protein hydrolysate by the enzymatic hydrolysis of a protein containing substrate, comprising free amino acids and peptides, wherein the molar fraction of a single desired free amino acid in the protein hydrolysate is higher than would have been obtained by acid hydrolysis of the same protein containing substrate, for use in the preparation of fermented foodstuffs, for instance beer, to provide for novel and unexpected flavors. Additionally, patent documents 12 and 13 relate to a method of obtaining protein hydrolysates enriched in free or peptide-bound glutamic acid via subjecting the substrate to a deamination process for use as flavoring agent for food and feed products.

[Patent document 1] Japanese Patent Application Unexamined Publication No. H6-78740

[Patent document 2] Japanese Patent Application Unexamined Publication No. H10-225287

[Patent document 3] Japanese Patent Application Examined Publication No. S55-38109

[Patent document 4] Japanese Patent Application Examined Publication No. S55-38110

[Patent document 5] Japanese Patent Application Examined Publication No. S39-14490

[Patent document 6] Japanese Patent Application Unexamined Publication No. H9-47276

[Patent document 7] Japanese Patent Application Unexamined Publication No. 2000-50887

[Patent document 8] Japanese Patent Application Unexamined Publication No. 2001-218590

[Patent document 9] Japanese Patent Application Unexamined Publication No. 10 113162

[Patent document 10] International Patent Application Publication No. WO 02/32232

[Patent document 11] US Patent Application Publication No. US 3 795 745 A

[Patent document 12] US Patent Application Publication No. US 6 036 983 A

[Patent document 13] US Patent Application Publication No. US 6 465 209 B1

[Non-patent document 1] Functionality of Proteins in Food., J.F. Zayas, ed., Springer-Verlag Berlin Heidelberg 1997, p.272-274

[DISCLOSURE OF THE INVENTION]

[Problems to be Solved by the Invention]

An object of the present invention is to provide a method for producing a beer or a beer-like beverage having mellowness, a special flavor and a good taste. In particular, an object of the present invention is to provide a method for producing a beer or a beer-like beverage having a flavor and a good taste that have never been obtained by conventional addition of protease / peptidases or usual addition of protein and peptide. Furthermore, an object of the present invention is to provide a method for producing a beer or a beer-like beverage in which the continuation of foam is improved.

[Means to Solve the Problems]

The present inventors have searched for a new production method in order to provide a beer or a beer-like beverage having a flavor and a good taste, which are different from those obtained by a conventional method, and having a mellowness. As a result, the present inventors have found an improvement method of improving a flavor and the like of a beer or a beer-like beverage by using the effect of protein-deamidating enzyme, which is a method that is utterly different from conventional methods. That is to say, the present invention provides the below-mentioned production method and the below-mentioned beer or a beer-like beverage.

[1] A production method of a beer or a beer-like beverage fermented by using a beer yeast, comprising allowing a protein-deamidating enzyme to act on at least a part of a raw material in the course of production.
[2] The production method described in [1], wherein the protein-deamidating enzyme is added in at least a part of the production process of a beer or a beer-like beverage.
[3] The production method described in [2], wherein the protein-deamidating enzyme is added in a preparation process, a fermentation process, or an aging process.
[4] The production method described in [2] or [3], wherein a protease is further added in at least a part of the production process of a beer or a beer-like beverage.
[5] The production method described in [1], wherein deamidated protein and/or deamidated peptide obtained by the action of protein-deamidating enzyme is added in at least a part of the production process of a beer or a beer-like beverage.
[6] The production method described in [1], wherein deamidated peptide obtained by the actions of protein-deamidating enzyme and protease is added in at least a part of the production process of a beer or a beer-like beverage.
[7] The production method described in any of [1] to [6], wherein the protein-deamidating enzyme is an enzyme derived from a genus of Chryseobacterium, Flavobacterium, Empedobacter, Sphingobacterium, Aureobacterium or Myroides.
[8] The production method described in any of [1] to [6], wherein the protein-deamidating enzyme is a peptide glutaminase or a protein deamidase.

Note here that some examples of the use of protein-deamidating enzyme in the field of food have been known. For example, Japanese Patent Application Unexamined Publication No. 2000-50887 (patent document 7) and No. 2001-218590 (patent document 8) disclose a method of improving the functions, that is, an emulsifying property, a foaming property, and a solubility of food protein by using protein-deamidating enzyme. However, any documents do not describe a method of using this enzyme for the purpose of producing a beer or a beer-like beverage, or a method of using deamidated protein and/or peptide for producing a beer or a beer-like beverage. An example of food on which protein-deamidating enzyme is allowed to act, which are described in these documents, includes coffee whiteners, juices, dressings, mayonnaises, creams, batter for deep-fried foods, pancake, bread, crackers, biscuits, cookies, pizza, pie crust, mineral absorption promoter, amino acid based seasoning agents (HAP and HVP), miso, soy sauce, isolated soybean protein, concentrated soybean protein, infant foods, yoghurt, ham and sausage, and pudding-like foods. The above-mentioned documents do not describe the use of protein-deamidating enzyme in production of a beer or a beer-like beverage. Furthermore, an example of food protein on which protein-deamidating enzyme is allowed to act, which are described in these documents, includes proteins derived from milk, processed meat, fish meat, wheat, soybean and egg. The documents do not mention barley protein that is a raw material of a beer or a beer-like beverage.

[Effect of the Invention]

According to the method of the present invention, in the course of production of a beer or a beer-like beverage, by allowing protein-deamidating enzyme to act on raw materials so as to provide a protein content and a protein composition, which are different from conventional ones, a beer or a beer-like beverage having a mellowness, a special flavor and a good taste can be obtained. Furthermore, with the effect of the protein-deamidating enzyme, it is possible to enhance the solubility of protein that tends to become turbid. Thereby, it is possible to prevent the turbidity without deteriorating the continuation of foam. As a result, a beer or a beer-like beverage having an excellent continuation of foam can be obtained.

[BRIEF DESCRIPTION OF THE DRAWINGS]

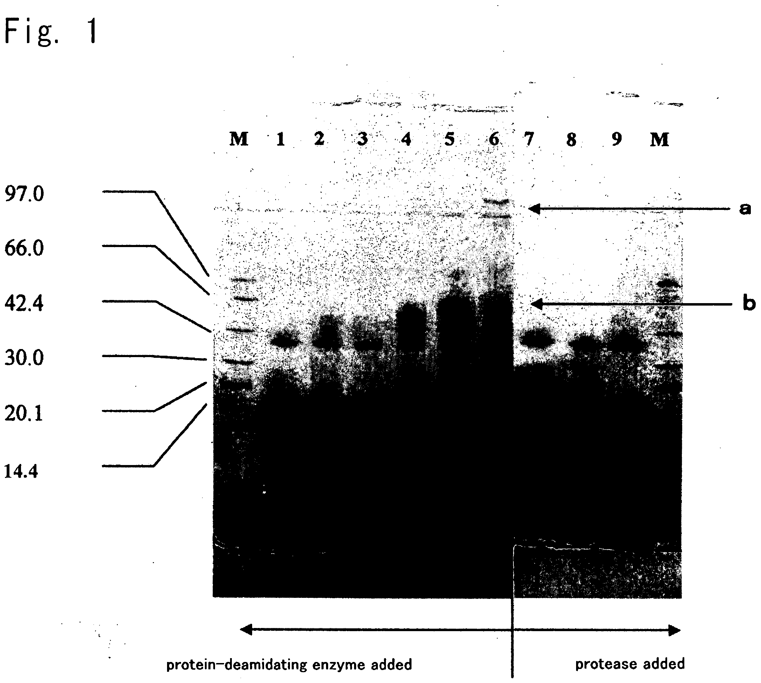

Fig. 1 shows results of analysis by SDS-polyacrylamide gel electrophoresis of wort obtained in Example 1. Lanes 1 to 9 correspond to groups in which no enzyme, PG1, PG2, PG3, PG4, PG5, UM, PN, and UM+PN were added shown in Table 1 in this order. The lane M denotes a molecular weight marker.

[BEST MODE OF CARRYING OUT THE INVENTION]

The production method of the present invention includes allowing protein-deamidating enzyme to act on at least a part of a raw material in the course of production. Typically, by adding a protein-deamidating enzyme in at least a part of a production process, a protein-deamidating enzyme is allowed to act on a raw material, that is, malt (a main raw material), auxiliary raw materials, and the like. On the other hand, in the production process of a beer or a beer-like beverage, protein and/or peptide that have been previously deamidated by the action of protein-deamidating enzyme may be added. Thus, in the production method of the present invention, a protein-deamidating enzyme may not be directly added in the production process as long as a raw material that has been acted on by the protein-deamidating enzyme is used.

The production process of a beer or a beer-like beverage in the present invention includes: a preparation process of adding warm water to pulverized malt, or pulverized malt and an auxiliary material or only an auxiliary material, and mixing them in a saccharification tank; a process of obtaining wort by filtering the saccharified moromi (mash); a fermentation process of adding hop to this wort and boiling the mixture, followed by inoculation of yeast; and an aging process of removing yeast after fermentation and aging in a storage tank and the like. In any one of processes (or a plurality of processes) of these processes, a protein-deamidating enzyme can be added. When a protein-deamidating enzyme is added in the preparation process, protein, which is derived from malt or auxiliary materials in the raw material and remains in the original beer cake, is deamidated so that the solubility is increased and thereby is released into the wort. Alternatively, peptide and amino acid, which were generated through degradation by the co-action of protease or peptidase in the malt with an enzyme in the separately added protease preparation, move toward the inside of the wort. With such effects, it is possible to supply yeast with necessary nitrogen-containing compound sufficiently. Alternatively, when a protein-deamidating enzyme is added in the fermentation process with yeast, protein and peptide in the wort is deamidated and tends to be assimilated easily by yeast with endogenous protease of yeast and peptidase. As a result, metabolism of yeast during fermentation is activated or changed, so that a flavor component of a beer is largely enhanced or changed. Furthermore, by allowing a protein-deamidating enzyme to act during the aging process, the solubility of protein that tends to become turbid is improved. Thereby, it is possible to prevent turbidity without deteriorating the continuation of foam. Peptide and amino acid, which are not assimilated by yeast but remain, increase. As compared with the case where protein-deamidating enzyme is not used, the content of glutamic acid is increased. Therefore, it is possible to produce a beer or a beer-like beverage having mellowness, special flavor and a good taste.

The auxiliary material of the present invention denotes raw materials other than malt and hop regulated by Liquor Tax Law. An example of the auxiliary material includes vegetable raw materials such as barley, wheat, rye, oats, corn, rice, kaoliang, potato, soybean, pea, chickpea, and the like, and animal raw materials such as gelatin, or protein and/or peptide derived from these raw materials.

In the present invention, protein previously deamidated by a protein-deamidating enzyme is not particularly limited. An example of such protein is food protein derived from vegetable raw materials such as barley, wheat, rye, oats, corn, rice, kaoliang, potato, soybean, pea, chickpea, and the like, and food protein derived from animal raw materials such as gelatin.

The beer or the beer-like beverage produced according to the present invention is not limited to beer of Liquor Tax Law but includes brewage as a whole such as so-called sparkling liquor, various kinds of liquors that are fermented by using beer yeast.

As a protein-deamidating enzyme used in the present invention, any protein-deamidating enzymes may be used as long as they act directly on an amide group in protein and peptide and exert a deamidating effect without cleaving or crosslinking protein or peptide. An example thereof includes an enzyme described in Japanese Patent Application Unexamined Publication No. 2000-50887, and an enzyme described in Japanese Patent Application Unexamined Publication No. 2001-218590. Furthermore, another example of protein-deamidating enzyme includes peptide glutaminase such as peptide glutaminase I and peptide glutaminase II derived from Bacillus circulans described in Biochemistry, vol 10, 1222-1229 (1971), and protein deamidase such as plant-derived protein deamidase described in FEBS Letter, vol 302, 169-171 (1988), Physiologia Plantarum vol 96, 662-666 (1996), Nahrung vol 42, Nr. 3/4, S.168-169 (1998), and the like.

A protein-deamidating enzyme, which has prepared from a culture medium of a microorganism producing protein-deamidating enzyme, can be used. The microorganism used for preparing the protein-deamidating enzyme is not particularly limited and it is possible to use a microorganism that produces the enzyme in the culture medium. For example, a microorganism belonging to a genus of Chryseobacterium, Flavobacterium, Empedobacter, Sphingobacterium, Aureobacterium or Myroides may be used. In particular, it is preferable to use Chryseobacterium sp. No. 9670 belonging the genus of Chryseobacterium for preparing to the protein-deamidating enzyme. Chryseobacterium sp. No. 9670 has been deposited under the accession number FERM BP-7351 (transferred from the domestic deposition under the accession number FERM P-17664 based on the request of the transfer dated November 8, 2000) in National Institute of Bioscience and Human-Technology of Agency of Industrial Science and Technology of Ministry of International Trade and Industry (current National Institute of International Patent Organism Depositary of National Institute of Advanced Industrial Science and Technology, Central 6, 1-1-1 Higashi, Tsukuba, Ibaraki 305-8566).

A protein-deamidating enzyme can be obtained from a culture or a cell body of the above-mentioned microorganism. That is to say, a secretory protein-deamidating enzyme can be collected from the culture and other types of protein-deamidating enzyme can be collected from cell bodies. A method for preparing protein-deamidating enzyme from the culture may include a known protein separation and purification method (for example, centrifugation, UF concentration, salting-out, various chromatography using ion exchange resin, and the like). For example, a culture is centrifuged to remove cell body, and then subjected to a salting-out together with chromatography and the like. Thus, a subject enzyme can be obtained. When the enzyme is collected from cell bodies, the intended enzyme can be obtained by crushing cell bodies by, for example, pressure treatment, ultrasonication, and the like, followed by separation and purification as mentioned above. Note here that cell bodies may be previously collected from a culture by filtration, centrifugation, and the like, followed by carrying out a series of process (crushing, separation, and purification of cell bodies).

The addition amount of protein-deamidating enzyme is not particularly limited as long as it is an amount necessary for deamidating a protein. However, generally, 0.005 to 100 units per 1 ml of raw materials, and preferably 0.05 to 10 units per 1 ml of raw materials are used.

In one embodiment of the present invention, a protein-deamidating enzyme and a protease are used. That is to say, in the production method of this embodiment, a protein-deamidating enzyme and a protease are allowed to act on at least a part of raw materials. For example, in a part of the production process, a protein-deamidating enzyme and a protease are added. Both enzymes may not be added simultaneously. The process of adding a protein-deamidating enzyme and the process of adding a protease may be different from each other. The order of adding of both enzymes is not particularly limited when both enzymes are added at different timings.

In the production process, a peptide obtained by allowing a protease to act on may be added in the production process instead of directly adding a protease. Deamidated peptide (or deamidated protein) obtained by combining a protease and a protein-deamidating enzyme may be added in the production process. A method of acting the combination of protease and protein-deamidating enzyme is described in, for example, Japanese Patent Application Unexamined Publication No. 2000-50887.

The protease used in the preset invention is an enzyme catalyzing hydrolysis of peptide bond of protein. An example of the protease can include animal-derived protease such as pepsin, trypsin, chymotrypsin, and the like; plant-derived protease such as protease, papain, bromelain, and the like; and protease derived from various microorganisms. The combination of a plurality of kinds of proteases may be used.

The treatment with a protein-deamidating enzyme may be carried out concurrently with or in succession with the treatment with conventionally used enzyme preparations such as amylases, pullulanases, cellulases, hemicellulases, glucanases, protease / peptidases, and the like. With the use of such other enzyme agents, a fermentation property is improved and workability is improved. Thereby, it is possible to produce a beer or a beer-like beverage having higher mellowness.

Next, the present invention will be described in more detail with reference to Examples. It is to be noted that the below-mentioned Examples are described specifically and the present invention is in no way limited by the following Examples.

[Example 1]

<Preparation of protein-deamidating enzyme>

Chryseobacterium sp. No. 9670 (FERM BP-7351 as an accession number by National Institute of International Patent Organism Depositary of National Institute of Advanced Industrial Science and Technology) was cultured in an LB Base medium at 25°C for 40 hours. Then, the culture medium was made free from cell bodies by centrifugation at 4°C and 12000 rpm (22200 x g) for 20 minutes to obtain a supernatant. The obtained supernatant was allowed to pass through an ultrafiltration membrane (SEP-0013, the product of Asahi Kasei) to effect about 25-fold concentration, followed by lyophilization to obtain a crude enzyme powder. This was dissolved in a 10 mM sodium phosphate buffer (pH 6.5) containing 2.0 M NaCl, made free of insolubles by centrifugation at 4°C and 10000 rpm (12300 x g) for 15 minutes to obtain a supernatant. The obtained supernatant was subjected to a phenyl sepharose CL-6B column (Pharmacia) equilibrated with a 10 mM sodium phosphate buffer (pH 6.5) containing 2.0 M NaCl to elute the adsorbed protein with a linear gradient of NaCl from 2.0 M to 0 M.

The protein deamidating activity fractions were collected, concentrated using an ultrafiltration membrane, subjected to a sephacryl S-100 column equilibrated with 10 mM sodium phosphate buffer (pH 6.5) containing 0.6 M NaCl and 0.05% Tween 20 and then eluted with the same buffer. The following method was employed to measure the enzymatic activity of each fraction, and the fractions having a protein deamidating activity were collected and concentrated using an ultrafiltration membrane to obtain protein-deamidating enzyme solution.

When the following methods employing Z-Gln-Gly (wherein Z represents a benzyloxycarbonyl group) and casein as substrates were carried out to measure the activity, enzyme preparations were obtained to have the activities of 33.7 units/ml (Z-Gln-Gly as a substrate) and 13.5 units/ml (casein as a substrate).

Enzyme activity assay: the enzyme activity assay was carried out according to the following method using Z-Gln-Gly and casein as substrates.

Activity measurement: 10 $\mu$l of enzyme solution is added to 100 $\mu$l of 176 mM phosphate buffer (pH 6.5) containing 10 mM Z-Gln-Gly, incubated for 60 minutes at 37°C, combined with 100 $\mu$l of 12% trichloroacetic acid solution to stop the reaction. After centrifugation (15000 rpm, 4°C, 5 minutes), the supernatant is measured using an F-kit ammonia (Roche Diagnostics) as described below (A1). Separately, measurement is carried out in the similar manner by employing water instead of the enzyme solution (A2).

100 $\mu$l of F-kit ammonia Reagent 2 is combined with 10 $\mu$l of the supernatant and 190 $\mu$l of water and allowed to stand at room temperature for 5 minutes, and 100 $\mu$l thereof is subjected to measurement of the absorbance at 340 nm (E1). The remaining 200 $\mu$l is combined with 1.0 $\mu$l of Reagent 3 (glutamate dehydrogenase), allowed to stand for 20 minutes at room temperature, and is subjected to the measurement of the absorbance at 340 nm (E2).

The quantity of the enzyme that liberates 1 $\mu$mol of ammonia per minute under the condition specified above is regarded as one unite, and the following equation is applied.

$$U/ml = 1.76 \times [A1\,(E1 - E2) - A2\,(E1 - E2)]$$

1 % casein (Hammarsten, Merck) is employed as a substrate instead of the 10 mM Z-Gln-Gly to measure the activity in the same manner, whereby confirming the action on an amide group bound to the protein.

[Example 2]

<Change of protein in wort by action of protein-deamidating enzyme (1)>

A concentrated solution (60 U/ml) of protein-deamidating enzyme prepared by the method of Example 1 mentioned above was added to a raw material mixture obtained by mixing 300 g of pulverized malt in 1050 ml of warm water at 48°C and subjected to a saccharification process by an infusion method. After the saccharification process, the mixture was subjected to filtration through a filter paper so as to obtain wort. As a control, the same process was carried out except that no enzyme was added. Furthermore, as a comparison, the same process was carried out by adding 60 mg of Umamizyme (Amano Enzyme Inc., peptidase activity: 70 U/g), adding 60 mg of Protease N (Amano Enzyme Inc., protein digestion activity: 150,000 U/g), and adding 60 mg of Umamizyme and Protease N, as protease / peptidase. Table 1 shows the results of the quantitative determination of the content of the obtained protein in wort by using DC-protein assay kit (Bio-RAD). The protein content was determined by forming a calibration curve by using bovine serum albumin as a reference material. Furthermore, the obtained protein in wort was analyzed by SDS-polyacrylamide electrophoresis. SDS-polyacrylamide electrophoresis was carried out by using Phast system 8-25% gel (Pharmacia). The results are shown in Fig. 1.

[Table 1]

| Test group | Added enzyme | Addition amount | Protein content in wort (mg/ml) |
|---|---|---|---|
| Not added | - | - | 9.29 |
| PG1 | protein-deamidating enzyme | 0.6 U | 9.32 |
| PG2 | protein-deamidating enzyme | 6.0 U | 10.1 |
| PG3 | protein-deamidating enzyme | 12.0 U | 12.1 |
| PG4 | protein-deamidating enzyme | 30.0 U | 13.5 |
| PG5 | protein-deamidating enzyme | 60.0 U | 14.7 |
| UM | Umamizyme | 60.0 mg | 11.5 |
| PN | Protease N | 60.0 mg | 14.8 |
| UM+ PN | Umamizyme Protease N | 60.0 mg 60.0 mg | 15.2 |

As is apparent from Table 1, with the addition of protein-deamidating enzyme, the content of protein in wort is increased and the increase is dependent upon the addition amount.

On the other hand, as is apparent from Fig. 1, with the addition of protein-deamidating enzyme, protein having a molecular weight of 30000 to 40000 that cannot be observed in the control group in which no enzyme was added (b in Fig. 1) and high-molecular protein that cannot be accommodated in an SDS-polyacrylamide gel (a in Fig. 1) were eluted into wort. It is shown that the increase is dependent upon the addition amount. It is estimated that this protein having a molecular weight of 30000 to 40000 is hordein, that is, a protein derived from barley. On the other hand, in the test group in which protease / peptidase was added, the protein content in wort is increased (Table 1). However, in SDS-polyacrylamide gel electrophoresis, the increase of protein was not observed (Fig. 1). Therefore, in the test group in which protease / peptidase was added, it is shown that low molecular protein, that is, peptide is increased.

As mentioned above, by the action of protein-deamidating enzyme, the amount of soluble protein in wort can be increased and at the same time, protein that is not shown in the usual production method can be eluted into wort. With the increase of the amount of the solubilized protein, it is possible to supply yeast with the sufficient amount of nitrogen-containing compound in the later fermentation process. Thus, the metabolism of yeast is activated and the flavor of a beer is enhanced. In particular, in the deamidated and solubilized protein, with the action of protease of malt, protease agent added if necessary, or protease of yeast itself, amino acid and low-molecular peptide that can be used by yeast are easily produced. As a result, the metabolism of yeast is effected and the production amount of higher alcohol, ester, diacetyl and the like, which affects the flavor and taste, is increased or changed, so that a beer having a special flavor and a good taste is obtained. Furthermore, the amount of the peptide and amino acid remaining without being assimilated by yeast is increased. Thus, the mellowness is improved and a special flavor and good taste are formed. As mentioned above, it has been clarified that the use of protein-deamidating enzyme is effective for improving the mellowness of a beer and formation of a special flavor and a good taste.

[Example 3]

<Change of protein in wort by action of protein-deamidating enzyme (2)>

A solution of protein-deamidating enzyme (60 U/ml) prepared by the method of Example 1 mentioned above was added to a raw material mixture obtained by pulverizing 75 g of malt and 225 g of barley and mixing the pulverized materials in 1050 ml of warm water at 48°C and subjected to a saccharification process by an infusion method. After the saccharification process, the mixture was subjected to filtration through a filter paper so as to obtain wort. As a control, the same procedure was carried out except that no enzyme was added. Furthermore, a test group in which protein-deamidating enzyme and Umamizyme were simultaneously added was similarly carried out. The results of quantitative determination by using DC-protein assay kit (Bio-RAD) are shown in Table 2. The protein content was determined by forming a calibration curve by using bovine serum albumin as a reference material. Furthermore, protein in the obtained wort was analyzed by SDS-polyacrylamide electrophoresis. SDS-polyacrylamide electrophoresis was carried out by using Phast system 8-25% gel (Pharmacia).

[Table 2]

| Test group | Added enzyme | Addition amount | Protein content in wort (mg/ml) |
|---|---|---|---|
| Not added | - | - | 8.32 |
| PG1 | protein-deamidating enzyme | 0.6 U | 9.44 |
| PG2 | protein-deamidating enzyme | 6.0 U | 9.86 |
| PG3 | protein-deamidating enzyme | 12.0 U | 15.2 |
| PG4 | protein-deamidating enzyme | 30.0 U | 16.5 |
| PG5 | protein-deamidating enzyme | 60.0 U | 16.7 |
| PG+ UM | protein-deamidating enzyme Umamizyme | 60.0 U 60.0 mg | 18.3 |

As is apparent from Table 2, with the addition of protein-deamidating enzyme, the content of protein in wort is increased and the increase is dependent upon the addition amount. Furthermore, it is shown that by using Umamizyme together, the protein content in the wort is increased. As a result of the SDS-polyacrylamide gel electrophoresis of such wort, similar to Example 2, with the addition of protein-deamidating enzyme, protein having a molecular weight of 30,000 to 400,000 that cannot be observed in the test group in which no enzyme was added and high-molecular protein that cannot be accommodated by SDS-polyacrylamide gel were eluted into the wort. It is shown that the increase is dependent upon the addition amount. On the other hand, in the test group using protein-deamidating enzyme and Umamizyme together, although the content of protein in the wort is increased, no new protein band was detected. This shows that the solubilized protein is made into a low molecule by the action of Umamizyme and broken down into peptide and amino acid having a molecular weight of about 10,000 or less, which cannot be detected by SDS-polyacrylamide gel electrophoresis.

As mentioned above, in the case where an auxiliary material is used, by the action of an auxiliary material, it is possible to increase the amount of soluble protein in the wort and at the same time, it is possible to allow protein that cannot be observed in the usual production method to elute into the wort. From this result, it was demonstrated that the use of protein-deamidating enzyme is effective for improvement of mellowness and formation of special flavor and good taste.

On the other hand, by using protein-deamidating enzyme and a protease (for example, Umamizyme) together, the content of soluble protein in the wort is further increased and at the same time, in particular, the content of peptide and amino acid having a relatively low molecular weight is increased. From this result, with the use of these two enzymes together, nitride-containing compound, which yeast is thought to easily assimilate, further increased and the amount of peptide and amino acid remaining without being assimilated with yeast. Thus, it was demonstrated that the use of these two enzymes was effective for producing a beer or a beer-like beverage that is mellower and has a special flavor and a good taste.

[Industrial applicability]

A beer or a beer-like beverage produced by a method of the present invention has different content and composition of protein, peptide and/or amino acid as compared with a beer produced by a conventional method. Thus, a beer or a beer-like beverage having a mellowness and special flavor and good taste can be provided. In the beer or a beer-like beverage produced by the method of the present invention, by the action of protein-deamidating enzyme, the improvement of the continuation of foam can be expected.

**Claims**

1. A production method of a beer or a beer-like beverage fermented by using a beer yeast, comprising allowing a protein-deamidating enzyme to act on at least a part of a raw material in the course of production.

2. The production method according to claim 1, wherein the protein-deamidating enzyme is added in at least a part of the production process of a beer or a beer-like beverage.

3. The production method according to claim 2, wherein the protein-deamidating enzyme is added in a preparation process, a fermentation process, or an aging process.

4. The production method according to claim 2 or 3, wherein a protease is further added in at least a part of the production process of a beer or a beer-like beverage.

5. The production method according to claim 1, wherein deamidated protein and/or deamidated peptide obtained by the action of protein-deamidating enzyme is added in at least a part of the production process of a beer or a beer-like beverage.

6. The production method according to claim 1, wherein deamidated peptide obtained by the actions of protein-deamidating enzyme and protease is added in at least a part of the production process of a beer or a beer-like beverage.

7. The production method according to any of claims 1 to 6, wherein the protein-deamidating enzyme is an enzyme derived from a genus of Chryseobacterium, Flavobacterium, Empedobacter, Sphingobacterium, Aureobacterium or Myroides.

8. The production method according to any of claims 1 to 6, wherein the protein-deamidating enzyme is a peptide glutaminase or a protein deamidase.

**Patentansprüche**

1. Herstellungsverfahren von einem Bier oder einem Bier-ähnlichen Getränk, welches unter Verwendung einer Bierhefe fermentiert wird, umfassend das Ermöglichen des Einwirkens eines Protein-deamidierenden Enzyms auf zumindest einen Teil eines Rohmaterials im Verlauf der Herstellung.

2. Herstellungsverfahren nach Anspruch 1, wobei das Protein-deamidierende Enzym in zumindest einen Teil des Herstellungsprozesses von einem Bier oder einem Bier-ähnlichen Getränk hinzugefügt wird.

3. Herstellungsverfahren nach Anspruch 2, wobei das Protein-deamidierende Enzym in einen Vorbereitungsprozess, einen Fermentationsprozess oder einen Alterungsprozess hinzugefügt wird.

4. Herstellungsverfahren nach Anspruch 2 oder 3, wobei zusätzlich eine Protease in zumindest einen Teil des Herstellungsprozesses von einem Bier oder einem Bier-ähnlichen Getränk hinzugefügt wird.

5. Herstellungsverfahren nach Anspruch 1, wobei deamidiertes Protein und/oder deamidiertes Peptid, das durch die Wirkung eines Protein-deamidierenden Enzyms erhalten wurde, in zumindest in einem Teil des Herstellungsprozesses von einem Bier oder einem Bier-ähnlichen Getränk hinzugefügt wird.

6. Herstellungsverfahren nach Anspruch 1, wobei deamidiertes Peptid, das durch die Wirkung eines Protein-deamidierenden Enzyms und Protease erhalten wird, in zumindest einen Teil des Herstellungsprozesses von einem Bier oder einem Bier-ähnlichen Getränk hinzugefügt wird.

**7.** Herstellungsverfahren nach einem der Ansprüche 1 bis 6, wobei das Protein-deamidierende Enzym ein Enzym ist, das aus einer Gattung von Chryseobacterium, Flavobacterium, Empedobacter, Sphingobacterium, Aureobacterium oder Myroides stammt.

**8.** Herstellungsverfahren nach einem der Ansprüche 1 bis 6, wobei das Protein-deamidierende Enzym eine Peptid-Glutaminase oder eine Protein-Deamidase ist.

**Revendications**

**1.** Procédé de production d'une bière ou d'une boisson fermentée de type bière en utilisant une levure de bière, comprenant le fait de permettre à une enzyme de désamidation de protéine d'agir sur au moins une partie d'une matière première au cours de la production.

**2.** Procédé de production selon la revendication 1, dans lequel l'enzyme de désamidation de protéine est ajoutée dans au moins une partie du processus de production d'une bière ou d'une boisson de type bière.

**3.** Procédé de production selon la revendication 2, dans lequel l'enzyme de désamidation de protéine est ajoutée dans un processus de préparation, un processus de fermentation, ou un processus de maturation.

**4.** Procédé de production selon la revendication 2 ou 3, dans lequel une protéase est en outre ajoutée dans au moins une partie du processus de production d'une bière ou d'une boisson de type bière.

**5.** Procédé de production selon la revendication 1, dans lequel une protéine désamidée et/ou un peptide désamidé obtenu par l'action d'une enzyme de désamidation de protéine est ajouté dans au moins une partie du processus de production d'une bière ou d'une boisson de type bière.

**6.** Procédé de production selon la revendication 1, dans lequel un peptide désamidé obtenu par les actions d'une enzyme de désamidation de protéine et d'une protéase est ajouté dans au moins une partie du processus de production d'une bière ou d'une boisson de type bière.

**7.** Procédé de production selon l'une quelconque des revendications 1 à 6, dans lequel l'enzyme de désamidation de protéine est une enzyme dérivée d'un genre de Chryseobacterium, Flavobacterium, Empedobacter, Sphingobacterium, Aureobacterium ou Myroides.

**8.** Procédé de production selon l'une quelconque des revendications 1 à 6, dans lequel l'enzyme de désamidation de protéine est un peptide glutaminase ou une protéine désamidase.

# Fig. 1

protein-deamidating enzyme added                    protease added

EP 1 914 298 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H678740 B
- JP H10225287 B
- JP S5538109 B
- JP S5538110 B
- JP S3914490 B
- JP H947276 B
- JP 2000050887 A
- JP 2001218590 A
- JP 10113162 A
- WO 0232232 A
- US 3795745 A
- US 6036983 A
- US 6465209 B1

**Non-patent literature cited in the description**

- Functionality of Proteins in Food. Springer-Verlag, 1997, 272-274
- *Biochemistry,* 1971, vol. 10, 1222-1229
- *FEBS Letter,* 1988, vol. 302, 169-171
- *Physiologia Plantarum,* 1996, vol. 96, 662-666
- *Nahrung,* 1998, vol. 42 (3/4), 168-169
- *Organism Depositary of National Institute of Advanced Industrial Science and Technology,* 305-8566